# EUROPEAN PATENT APPLICATION

(11) **EP 4 300 361 A1**
(43) Date of publication of application: **03.01.2024**
(21) Application number: 22182317.2
(22) Date of filing: 30.06.2022
(51) Int. Cl.: G06N 3/04, G06N 3/08

(54) **METHODS AND SYSTEMS FOR OPTIMIZING A PEAK MEMORY USAGE OF AN ARTIFICIAL NEURAL NETWORK GRAPH**

(71) Applicant: Aptiv Technologies Limited, St. Michael (BB)
(72) Inventor: AGUILAR, Miguel Angel, 40235 Düsseldorf (DE)
(74) Representative: Manitz Finsterwald Patent- und Rechtsanwaltspartnerschaft mbB

(57) **Abstract**

A computer implemented method for optimizing a memory usage of an artificial neural network graph comprising a plurality of layers and a plurality of tensors comprises the following steps: for each of the plurality of layers, determining a tensor working set, wherein the tensor working set comprises tensors that consume memory with respect to the respective layer; determining whether at least one working set of the plurality of working sets requires memory usage above a pre-determined threshold; if it is determined that at least one working set of the plurality of working sets requires memory usage above the pre-determined threshold, identifying a working set of the plurality of working sets which requires memory usage above the pre-determined threshold; identifying at least one layer responsible for the memory usage above the pre-determined threshold in the identified working set; and pruning the identified at least one layer.

## Description

### FIELD

The present disclosure relates to methods and systems for optimizing a memory usage of an artificial neural network graph, in particular it relates to pruning artificial neural network graphs for optimizing the memory usage, in particular for optimizing the peak memory usage.

### BACKGROUND

In modern embedded systems, Machine Learning (ML) algorithms are used to solve various tasks. These tasks are often performed by Deep Neural Networks (DNNs), which have been a major target for research and development both in industry and academia in recent years. However, the deployment of DNNs lead to enormous computational and memory requirements, which result in costly target Systems-on-Chip (SoCs).

Since the vast majority of the existing technologies have been developed aiming server and web applications, embedded systems requirements are not always the initial target for DNNs. One typical strategy to minimize the requirements of DNNs is pruning, which removes non-important components of DNNs such as weights, channels or layers according to given importance metrics. Pruning is applied under the precondition that the deployed models still meet the Key Performance Indicators (KPIs). However, most of the existing pruning techniques do not consider specific resource budgets, such as memory requirements as an optimization goal for resource-constrained embedded systems.

"Channel pruning for accelerating very deep neural networks" by Yihui He, Xiangyu Zhang, and Jian Sun, International Conference on Computer Vision (ICCV), volume 2, page 6, 2017, presents channel pruning as a general optimization technique for DNNs. However, this technique does not consider memory as a key target of the optimization nor provides means to define an userdefine memory budget to achieve after pruning.

"ChipNet: Budget-Aware Pruning with Heaviside Continuous Approximations" by Rishabh Tiwari, Udbhav Bamba, Arnav Chavan, Deepak K. Gupta, published in ICLR 2021 Conference, proposes a pruning strategy that employs continuous Heaviside function to identify a highly sparse network out of an existing dense network. This approach allows to set different types of budgets during pruning. However, this approach is not able to identify and set a budget specifically for the peak memory of the neural network.

"HFP: Hardware-Aware Filter Pruning for Deep Convolutional Neural Networks Acceleration" by Fang Yu, Chuanqi Han, Pengcheng Wang, Ruoran Huang, Xi Huang and Li Cui, 25th International Conference on Pattern Recognition (ICPR), 2021, proposes a structured pruning approach which targets the reduction of the latency. This approach ranks the channels to be pruned based on the latency potential improvement. However, this approach does not consider the peak memory budget as a pruning optimization target

"RANP: Resource Aware Neuron Pruning at Initialization for 3D CNNs" by Zhiwei Xu, Thalaiyasingam Ajanthan, Vibhav Vineet, Richard Hartley published in International Conference on 3D Vision (3DV), 2020, proposes an approach which targets the pruning of neurons in 3D convolutions. The importance of the neurons is defined based on their contribution to FLOPS and memory requirements. However, this approach is not able to identify and specifically reduce the peak memory

Most of the existing techniques perform pruning by removing non-important channels without a concrete resource constraint or budget in mind. In some cases, resource budgets are defined to guide the pruning process. However, there are no existing approaches that identify and prune the peak memory of neural networks to help fitting these networks in the on-chip memory of resource constrained embedded systems.

Accordingly, there is a need to provide enhanced pruning methods.

### SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for optimizing a memory usage of an artificial neural network graph comprising a plurality of layers and a plurality of tensors, the method comprising the following steps performed (in other words: carried out) by computer hardware components: for each of the plurality of layers, determining a tensor working set, wherein the tensor working set comprises tensors that consume memory with respect to the respective layer; determining whether at least one working set of the plurality of working sets requires memory usage above a pre-determined threshold; if it is determined that at least one working set of the plurality of working sets requires memory usage above the pre-determined threshold, identifying a working set of the plurality of working sets which requires memory usage above the pre-determined threshold; identifying at least one layer responsible for the memory usage above the pre-determined threshold in the identified working set; and pruning the identified at least one layer.

For example, the computer implemented method may optimize a peak memory usage of the artificial neural network graph. The method may thus comprise: for each of the plurality of layers, determining a tensor working set, wherein the tensor working set comprises tensors that consume memory with respect to the respective layer; identifying one or more working sets of the plurality of working sets which require a peak memory usage; identifying at least one layer responsible for the peak memory usage in the one or more identified working sets; and pruning the identified at least one layer.

Peak memory usage may be understood as a maximum usage of memory of the artificial neural network.

The artificial neural network graph may represent the artificial neural network. The artificial neural network graph may be a directed graph, where the edges correspond to the flow of data and nodes correspond to computation. The nodes may represent the layers. The computations may consume the data from the inbound edges and may produce the data on the outbound edges. The data transferred by the edges may be stored in tensor data structures and thus, the data that is transferred by the edges may be called "tensors".

It will be understood that being "responsible" for memory usage regarding a layer may mean that the memory usage occurs due to the layer, i.e. that the layer is so that if the layer required less memory, then the overall memory use of the artificial neural network would be reduced; in yet other words: the layer induces use of memory to the amount of the respective memory usage.

The memory usage may be optimized by modifying (in particular pruning) the artificial neural network (NN).

For example, a working set regarding one layer may include the input tensors to that layer, the output tensors of that layer, and tensors alive in parallel which do not interact directly with the layer. "Alive" for a set of tensors in relation to a layer means that these tensors need to be simultaneously allocated or existing in the memory while processing the layer.

It is to be noted that also the input and output tensors are alive.

For example, the method according to various embodiments may provide peak-memory-aware pruning of deep neural networks for resource-constrained embedded systems.

According to various embodiments, the steps of identifying and pruning are repeated until every working set of the plurality of working sets requires memory below the pre-determined threshold. It is to be noted that pruning one layer may affect other layers, so that no further pruning may be required at that other layers.

According to various embodiments, in each step of identifying, the working set which requires a highest amount of memory, is identified. Since it is the highest amount of memory used during use of the artificial neural network which defines the overall requirements to the hardware for executing the artificial neural network, it is desirable to identify the working set which requires that highest amount of memory used.

According to various embodiments, each layer comprises a respective plurality of channels, and pruning the at least one identified layer comprises reducing a number of channels of the at least one identified layer. By reducing the number of channels, the memory usage may be reduced. The number of channels may be understood as the depth of the matrixes involved in the convolutions in the artificial neural network. Illustratively, when considering the data processed by the artificial neural network as images, the channels may correspond to the color channels of the images.

According to various embodiments, pruning the at least one identified layer comprises removing the at least one identified layer. By removing an entire layer, the memory usage may be reduced.

According to various embodiments, the working set of the plurality of working sets which requires maximum memory usage is determined based on an architecture of the artificial neural network graph. It has been found that by analyzing the architecture of the artificial neural network graph, similar to liveness analysis in compiler technologies, the working sets may be determined, and among these working sets, the one or more working sets which require the maximum memory usage may be identified.

According to various embodiments, the computer implemented method further comprising the following step: determining an intermediate representation of the artificial neural network graph; wherein the working set of the plurality of working sets which requires maximum memory usage is determined based on the intermediate representation. In the intermediate representation, an architecture of the artificial neural network graph is expressed in a convenient/ efficient way for analysis.

According to various embodiments, once every working set of the plurality of working sets requires memory below the pre-determined threshold, the artificial neural network graph after pruning is re-trained from scratch or fine-tuned from a previous training.

According to various embodiments, it may be determined whether the pre-determined memory use threshold is met after re-training; and if it is determined that the pre-determined memory use threshold is not met after re-training, repeating the steps of identifying and pruning. Thus, it may be ensured that the pruning indeed reduces the memory usage.

According to various embodiments, the at least one identified layer is pruned based on an importance metric, wherein preferably the importance metric is provided by user input. It has been found that by employing an importance metric, it may be ensured that the artificial neural network is still providing KPI results, or is still functionally correct, even after pruning. The (pruning) importance metric may define how important a component / channel is.

According to various embodiments, the importance metric is evaluated based on representative test data. The representative test data may be provided by the user.

According to various embodiments, the computer implemented method further comprises the following step: training (without or before pruning) the artificial neural network graph before evaluating the importance metrics.

According to various embodiments, the computer implemented method further comprises the following step: generating a report comprising at least one of a layer summary report, a tensor summary report, or a working set summary report. The report may give a sense how the neural network was actually optimized.

According to various embodiments, the artificial neural network and or the pre-determined (memory) threshold (in other words: memory budget) are provided by user input. Thus, the user may take influence on the pruning; this may provide that the pruning is provided in a way which is acceptable by the user.

According to various embodiments, the artificial neural network graph is to be deployed on a resource-constrained embedded system after pruning. It has been found that reducing the memory usage using methods according to various embodiments may allow to deploy the artificial neural network graph (after pruning) even on resource-constrained embedded systems. According to various embodiments, the embedded system is a mobile computing device, a mobile phone, a tablet computing device, an automotive compute platform, or an edge device.

Various embodiments provide pruning while at the same time considering a given peak memory budget to reduce the memory requirements of DNNs to a desired level. This allows DNNs to mostly run using on-chip memory and thus minimizing DDR (double data rate random access memory) usage and improving the performance of the network. In addition, by reducing the peak memory requirements, cheaper SoC with less memory can be used to enable cost-efficient ML- based products.

In another aspect, the present disclosure is directed at a computer system, said computer system comprising a plurality of computer hardware components configured to carry out several or all steps of the computer implemented method described herein. The computer system can be part of a vehicle.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

With the various embodiments, perform peak-memory-aware pruning may be provided to achieve a given peak memory budget for deep neural networks. Furthermore, not only pruning the neural networks may be provided, but also identification where the peak memory is located may be provided. The approach is flexible in terms of selection for importance metrics to decide which parts of the deep neural network are the least important to be safely pruned .The framework may generate multiple textual and graphical report that allow the user to understand in an intuitive way the location of the peak memory and the pruning results.

### DRAWINGS

Exemplary embodiments and functions of the present disclosure are described herein in conjunction with the following drawings, showing schematically:
- Fig. 1: an overview of a peak-memory-aware pruning system according to various embodiments;
- Fig. 2: an example of an intermediate representation according to various embodiments;
- Fig. 3: a flow diagram illustrating details of the peak-memory-aware pruning method according to various embodiments;
- Fig. 4: an illustration of an example of the liveness analysis according to various embodiments;
- Fig. 5: an intermediate representation as generated according to various embodiments;
- Fig. 6: a layer summary report according to various embodiments;
- Fig. 7: a tensor summary report according to various embodiments;
- Fig. 8: a working set summary report according to various embodiments;
- Fig. 9: an example of a graph of the memory of the different working sets according to various embodiments;
- Fig. 10: a flow diagram illustrating a method for optimizing a memory usage of an artificial neural network graph including a plurality of layers and a plurality of tensors according to various embodiments; and
- Fig. 11: a computer system with a plurality of computer hardware components configured to carry out steps of a computer implemented method for optimizing a memory usage of an artificial neural network graph including a plurality of layers and a plurality of tensors according to various embodiments.

### DETAILED DESCRIPTION

According to various embodiments, the challenge of reducing the peak memory consumption of machine learning (ML) networks is addressed. This may help to fit ML networks on cheaper systems on a chip (SoCs) with reduced on-chip memory and thus enabling cost-effective solutions for customers.

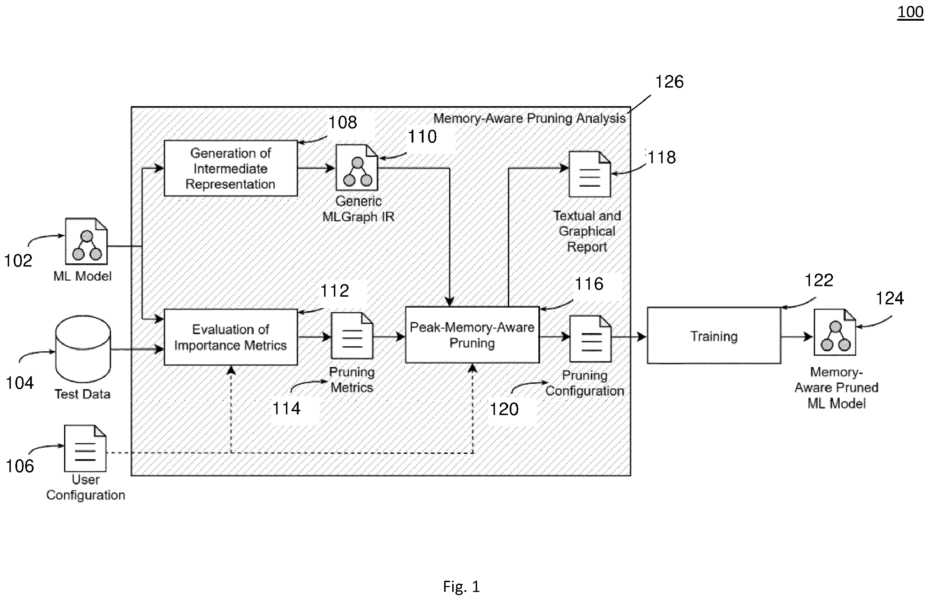

Fig. 1 shows an overview 100 of a peak-memory-aware pruning system according to various embodiments.

The inputs to the peak memory aware pruning flow are the ML Model file 102, which may be coming from any ML framework such as Tensorflow, Pytorch, among others. In addition, the user may provide test data 104 (which may for example be representative test data) and a user configuration 106 to decide on the type of importance metric and memory budget for the pruning analysis. As the first step 108 in the flow, a generic intermediate representation (IR) of the ML may be generated. The IR may be called *MLGraph.* This generic IR 110 of the ML model may enable a convenient and generic way of analyzing the network for pruning purposes. Parallel to the generation of the MLGraph IR, importance metrics may evaluated in step 112 to understand which components (for example which channels) of the ML are more relevant than others. There may be multiple importance metrics that can be used, and the framework is not fixed to specific metrics. The user may decide by means of the input configuration 106 the metric to be used. Using the MLGraph 110 and the pruning importance metrics 114, the peak-memory-aware pruning analysis 116 may take place. The analysis 116 may be going to first identify the peak-memory and the layers responsible for it and then using the pruning importance metrics 114 may prune the less relevant channels of the ML model until the peak-memory is below the target budget specified by the user by user configuration 106. Once the peak-memory-aware pruning analysis is completed, the framework may generate visual and textual reports 118 for the user to understand where the peak-memory was identified and how the network was pruned to achieve the memory budget goal. In addition, the framework may generate a pruning configuration file 120 that may be used to train (122) the ML network according to the pruning results generated according to various embodiments. Finally, after the training process, the resultant ML model 124 may have a peak memory below the target budget as specified by the user. In Fig. 1, the memory aware pruning analysis is provided as illustrated by box 126, and inputs and outputs to the box 126 are provided.

According to various embodiments, an intermediate representation of the ML graph may be provided for the peak-memory-aware pruning framework. This may allow to work on a generic representation, which is independent of the framework (e.g., Keras, Tensorflow, Pytorch, etc) that it was used to train the input ML model. In addition, the MLGraph IR may be annotated with useful metainformation to facilitate the analysis. The MLGraph may be composed of two types of components: 1) nodes that represents layers and 2) edges that represent tensors. Both components and the MLGraph itself may be provided with metainformation associated to them as following:

Nodes may represent MLGraph layers and may be provided with the following metainformation (but is not limited to the following details):
a. Layer id number;
b. Layer name;
c. Layer type (e.g., Convolution, Relu, etc)
d. Input and output tensors; and
e. Floating point operations FLOPS (with and without pruning).

Edges may represent MLGraph tensors and may be provided with the following metainformation:
a. Tensor id number;
b. Tensor name;
c. Tensor data type (e.g., int8, int16, etc);
d. Tensor shape (with and without pruning);
e. Tensor size (in bytes with and without pruning);
f. Producer layer; and
g. Consumers layers.

The MLGraph may be provided with the following metainformation:
a. Peak memory of the model (with and without pruning); and
b. Floating point operations FLOPS (with and without pruning).

When the MLGraph is built, most of the information as described above is collected for both MLGraph layers and tensors. The pruning information is pending to be annotated on the MLGraph, once the pruning analysis is performed.

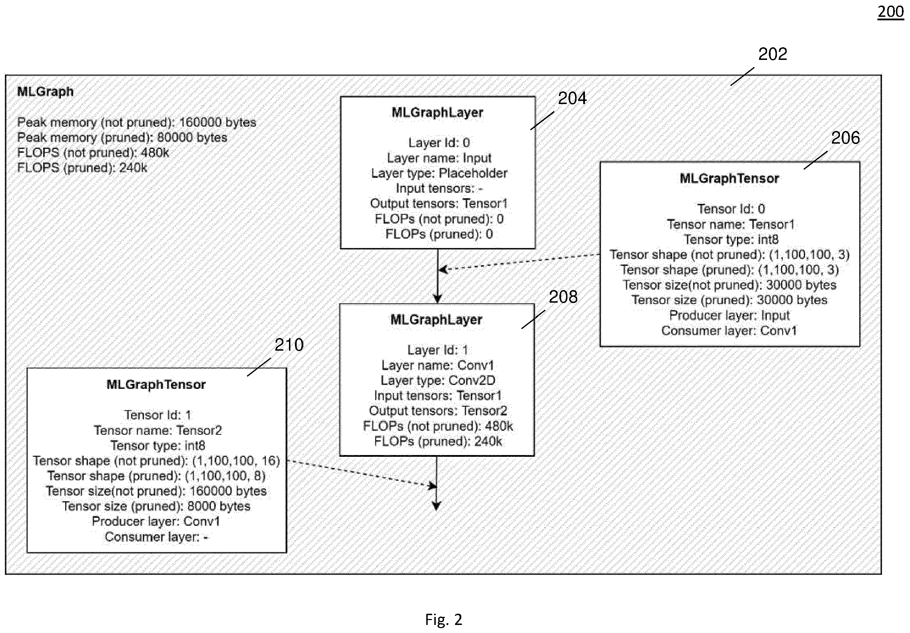

Fig. 2 shows an example 200 of a MLGraph 202, which is composed of two layers (one input layer 204 and a convolutional layer 208) and two tensors 206 and 210. This example shows the metainformation annotated on the nodes (layers 204, 208) and edges (tensors 206, 210), as well as the general graph level metainformation, such as model peak memory with and without pruning.

In order to prune a ML model, importance metrics may be used to identify parts of the networks, such as parameters, channels or even layers, which are redundant or not relevant for the functionally of the ML model. Evaluating this importance metrics may provide that functional correctness is maintained when pruning the ML model. There are multiple importance metrics, for example APoZ (average percentage of zeros) and Taylor. The APoZ may be built on the fact that the more zeros are present in a channel, the less important the channel is. Taylor may use the gradient as a measure of how important a channel is (the higher the gradient, the more important the channel is).

According to various embodiments, channel pruning (i.e., structured pruning) may be provided, since by removing channels the tensor sizes are reduced and thus the peak memory requirements of the ML Models is reduced. However, various embodiments are not limited to specific importance metrics and the user may implement and select any metric that is considered appropriate to judge the importance of the channels. In order to perform the importance analysis of the channel, the user may provide test data. As result of the importance metric evaluation, a file 114 is generated, which contains the list of all channels in the model with the name of its corresponding layers and importance metric values. Using this information, the peak-memory-aware pruning analysis may decide what channels can be pruned with minimum impact on the accuracy of the network.

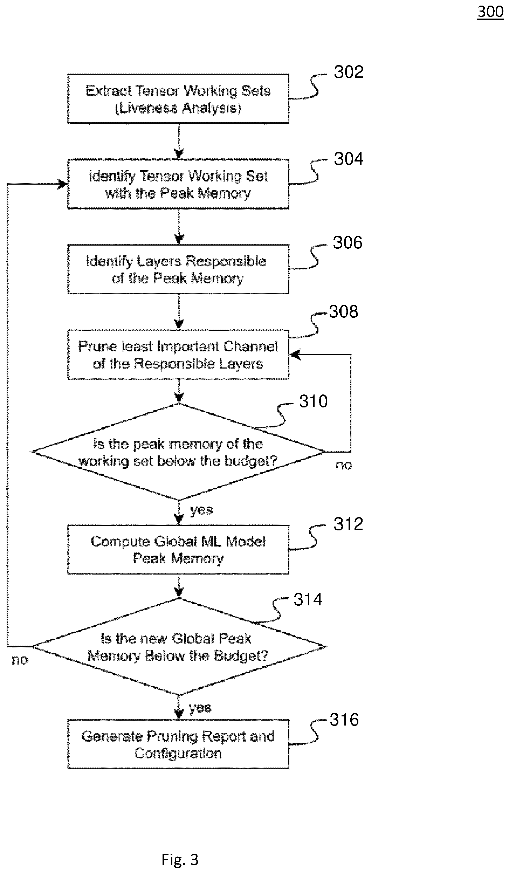

Fig. 3 shows a flow diagram 300 illustrating details of the peak-memory-aware pruning method according to various embodiments. The method takes as inputs the MLGraph 110 previously built and the pruning importance metrics 114. The first step of the method is to extract the tensor working sets (302), which are set of tensors that are simultaneously used or "alive". Extracting the tensor working sets may include performing a liveness analysis similar as in compiler technologies. In this case, the liveness analysis tries to find out when tensors are produced and consumed. The principle of this analysis is that when a tensor is consumed and not further used, then it should not be in memory anymore. With the information derived from the analysis, it is possible to identify tensors that are simultaneously alive and thus should be simultaneously allocated in memory. Tensor working sets are defined after each layer.

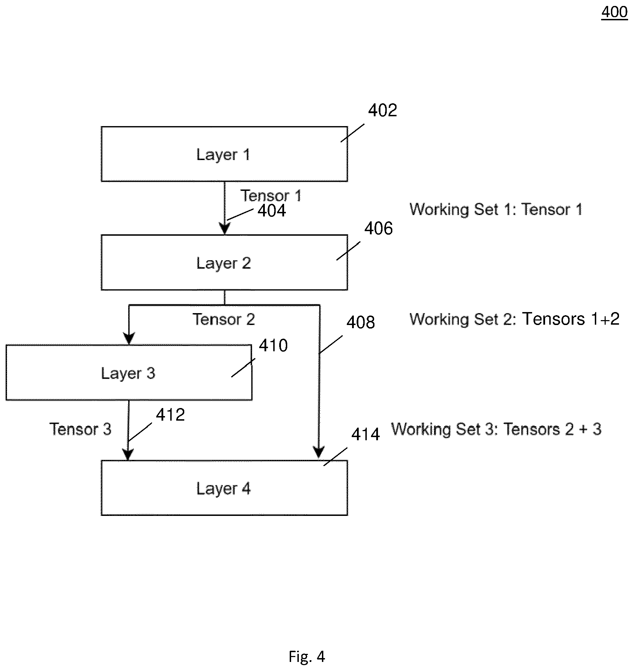

Fig. 4 shows an illustration 400 of an example of the liveness analysis according to various embodiments. In this example, there are four layers 402, 406, 410, 414 and three tensors 404, 408, 412. The working tensors are defined between layers. The first tensor 404 working set is between the first layer 402 and the second layer 406, and this is composed of the first tensor 404. The second working set is composed of the first tensor 404, which is the input to the second layer 406, and the second tensor 408, which is produced by the second layer 406. The third and last working set is after the third layer 410, and in this case the working set is composed of the second tensor 408 and the third tensor 412.

Returning to Fig. 3, after the tensor working sets are extracted, the next step is to identify the working set with peak memory (304). This may be done by adding up the tensors sizes of the tensors contained in each working set. Once the working set which requires the peak memory is identified, the next step is to identify the layers that generate the tensors of this working set (306). This may be important because the channel pruning may take place in those layers that are responsible for the tensors in the peak memory working set. Then, using the importance metrics 114, the least important channels, of the layers responsible for the peak memory working set, are pruned in an iterative fashion until the memory of the working set gets below the memory budget defined by the user in the user configuration 106. When the working set memory is below the budget, then it is verified in 312 if the overall peak memory is below the budget 314. If this is not the case, the next working set which requires the peak memory 304 is identified and pruned. This process may take place until all working sets are below the memory budged provided by the user. Then, as the final step 316, a report and the pruning configuration is generated.

The report generated after the memory-aware pruning analysis is concluded may include the following details:
- a graph that depicts the MLGraph and highlights the tensors which require the peak memory before pruning;
- a table with the following pruning summary:
   - memory before and after pruning on a tensor-by-tensor, working set and global basis;
   - FLOPS before and after pruning on a layer-by-layer basis;
   - tensor shapes before and after pruning;
- a bar graph that shows the memory of the working sets before and after pruning.

It may be the responsibility of the user to provide a reasonable memory budget. If the memory budget is too strict, then the risk is that the accuracy of the network could be impacted beyond acceptable levels. However, in the general case according to various embodiments, pruning can take place with minor or no degradation at all.

To illustrate the peak-memory-aware pruning framework, an example is presented in the following.

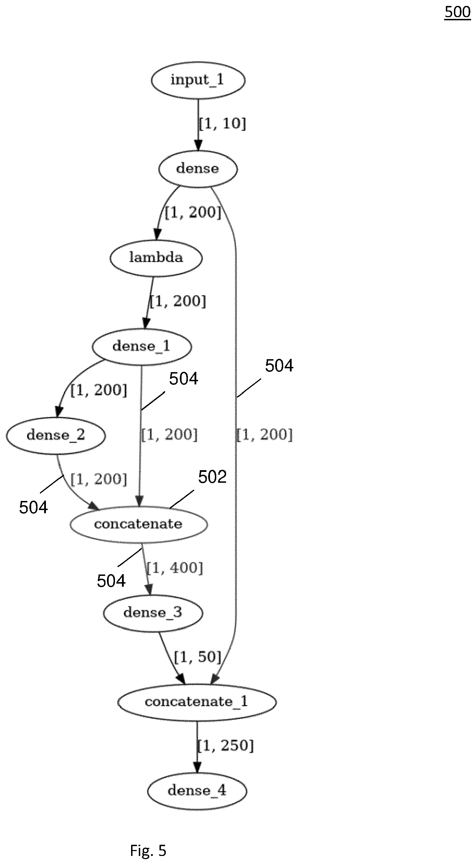

Fig. 5 shows an MLGraph 500 as generated according to various embodiments, which is composed of mainly dense, concatenation and lambda layers. In the MLGraph, the working set of tensors which requires the peak memory usage before pruning is marked by reference signs 504. This working set may be the working set related to concatenation layer 502. It is to be noted that this working set includes a parallel tensor that is not directly related to the concatenation layer 502.

In a user interface, the respective tensors 504 and the layer 502 may be marked in a different color to highlight them. This may help developers to very intuitively understand where the peak memory is located. In this example, the network has a peak memory before pruning of around 1 KB and the budget was set to 0.8 KB.

After the pruning process takes place, textual reports may be generated which contains information about layers, tensors and working sets before and after pruning.

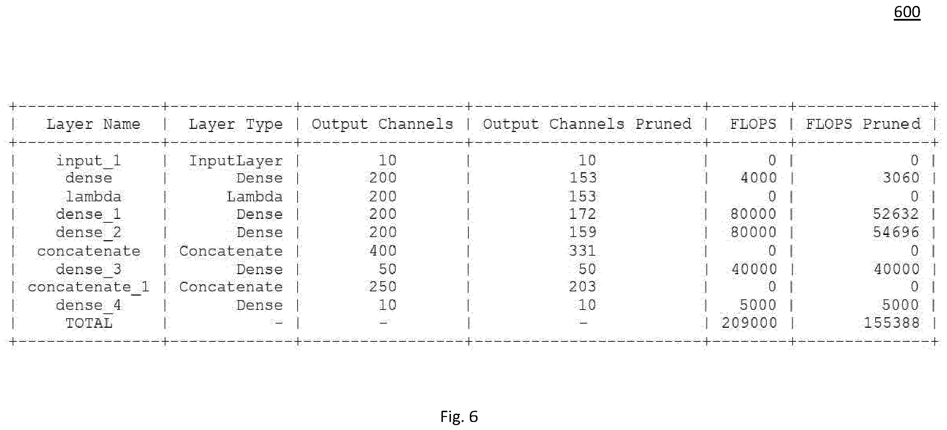

Fig. 6 shows a layer summary report 600 according to various embodiments, which shows the layer names, types, number of output channels before and after pruning, and the number of FLOPS before and after pruning.

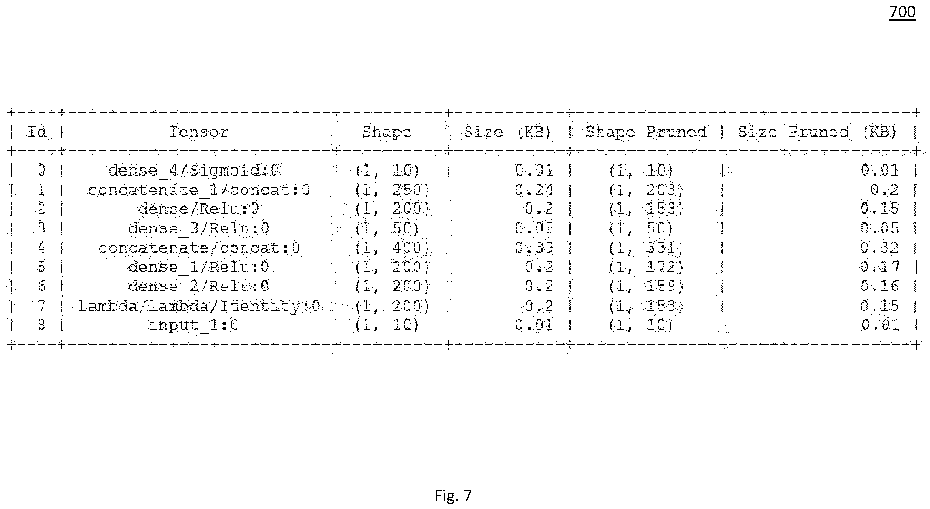

Fig. 7 shows a tensor summary report 700 according to various embodiments, which shows the tensor ids, names, shapes and size before and after pruning.

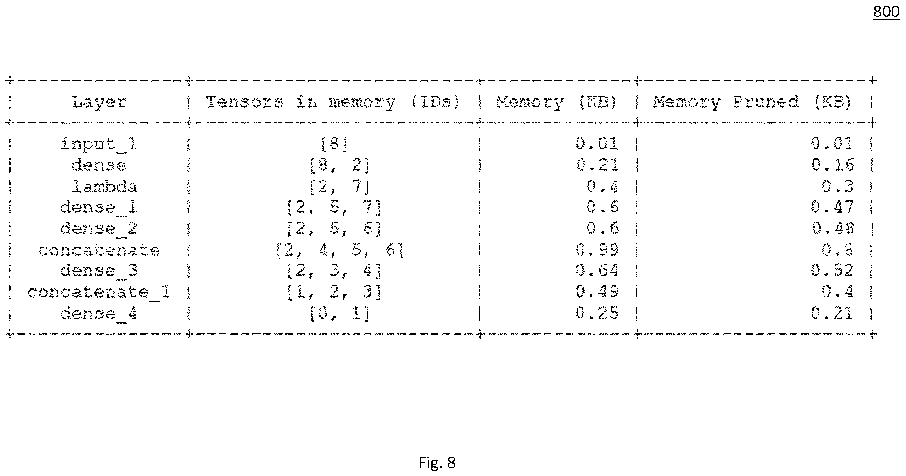

Fig. 8 shows a working set summary report 800 according to various embodiments, which shows the tensors alive after each layer is executed. In addition, the working set summary shows the aggregated memory of the working sets before and after pruning. The working set which requires the peak memory (in the present example the layer named "concatenate") may be highlighted in a different color.

In addition, to the textual reports, a graph of the memory of the different working sets may be generated.

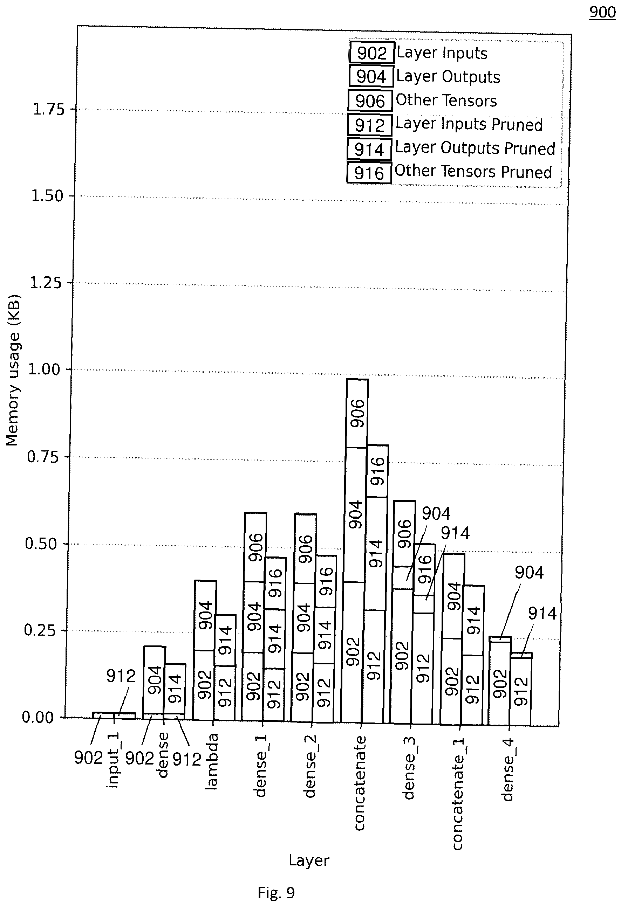

Fig. 9 shows an example of a graph 900 of the memory of the different working sets according to various embodiments, in particular a bar graph of memory of the working sets before and after pruning. In this graph, the working sets are presented on a layer-by-layer basis. Each bar has three elements: the input tensors to the given layer (indicated by reference sign 902 before pruning and by reference sign 912 after pruning), the output tensors to the given layer (indicated by reference sign 904 before pruning and by reference sign 914 after pruning), and other tensors that are simultaneously alive (indicated by reference sign 906 before pruning and by reference sign 916 after pruning). The memory before pruning and after pruning is illustrated. This graph may help to clearly appreciate how the peak memory is reduced. In the present example, the peak memory is in the concatenate layer.

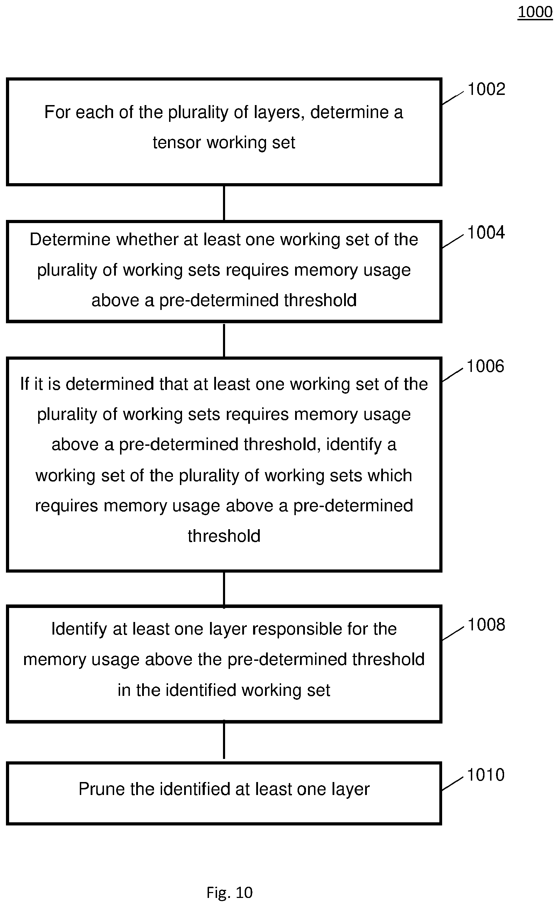

Fig. 10 shows a flow diagram 1000 illustrating a method for optimizing a memory usage of an artificial neural network graph including a plurality of layers and a plurality of tensors according to various embodiments. At 1002, for each of the plurality of layers, a tensor working set may be determined, wherein the tensor working set comprises tensors that consume memory with respect to the respective layer. At 1004, it may be determined whether at least one working set of the plurality of working sets requires memory usage above a pre-determined threshold. At 1006, if it is determined that at least one working set of the plurality of working sets requires memory usage above the pre-determined threshold, a working set of the plurality of working sets which requires memory usage above the pre-determined threshold may be determined. At 1008, at least one layer responsible for the memory usage above the pre-determined threshold in the identified working set may be identified. At 1010, the identified at least one layer may be pruned.

According to various embodiments, the steps of identifying and pruning may be repeated until every working set of the plurality of working sets requires memory below the pre-determined threshold.

According to various embodiments, in each step of identifying, the working set which requires a highest amount of memory, may be identified.

According to various embodiments, each layer may include a respective plurality of channels; and pruning the at least one identified layer may include or may be reducing a number of channels of the at least one identified layer.

According to various embodiments, pruning the at least one identified layer may include or may be removing the at least one identified layer.

According to various embodiments, the working set of the plurality of working sets which requires maximum memory usage may be determined based on an architecture of the artificial neural network graph.

According to various embodiments, the method may further include determining an intermediate representation of the artificial neural network graph; wherein the working set of the plurality of working sets which requires maximum memory usage may be determined based on the intermediate representation.

According to various embodiments, once every working set of the plurality of working sets requires memory below the pre-determined threshold, the artificial neural network graph after pruning may be re-trained from scratch or fine-tuned from a previous training.

According to various embodiments, the at least one identified layer may be pruned based on an importance metric, wherein preferably the importance metric is provided by user input.

According to various embodiments, the importance metric may be evaluated based on representative test data.

According to various embodiments, the method may further include training the artificial neural network graph before evaluating the importance metrics. According to various embodiments, the method may further include generating a report comprising at least one of a layer summary report, a tensor summary report, or a working set summary report.

According to various embodiments, the artificial neural network and or the pre-determined threshold may be provided by user input.

According to various embodiments, the artificial neural network graph may be to be deployed on a resource-constrained embedded system after pruning.

According to various embodiments, the embedded system is a mobile computing device, a mobile phone, a tablet computing device, an automotive compute platform, or an edge device.

Each of the steps 1002, 1004, 1006, 1008, 1010 and the further steps described above may be performed by computer hardware components.

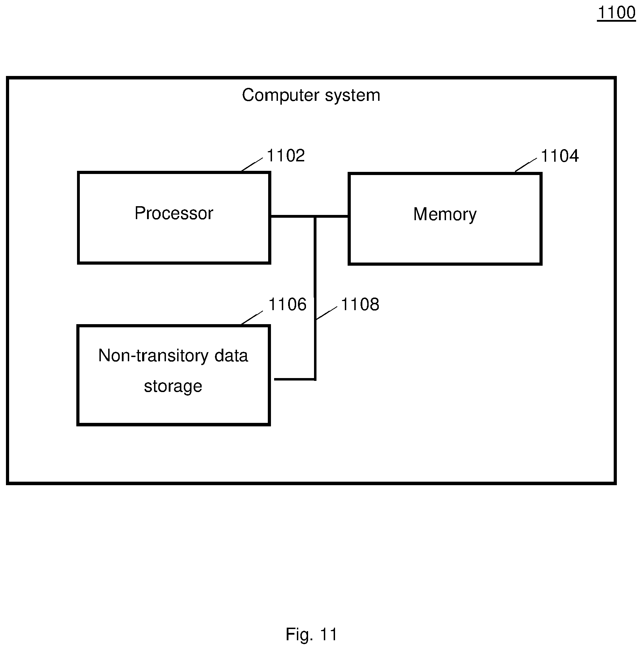

Fig. 11 shows a computer system 1100 with a plurality of computer hardware components configured to carry out steps of a computer implemented method for optimizing a memory usage of an artificial neural network graph including a plurality of layers and a plurality of tensors according to various embodiments. The computer system 1100 may include a processor 1102, a memory 1104, and a non-transitory data storage 1106.

The processor 1102 may carry out instructions provided in the memory 604. The non-transitory data storage 1106 may store a computer program, including the instructions that may be transferred to the memory 1104 and then executed by the processor 602.

The processor 1102, the memory 1104, and the non-transitory data storage 1106 may be coupled with each other, e.g. via an electrical connection 1108, such as e.g. a cable or a computer bus or via any other suitable electrical connection to exchange electrical signals.

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 1100.

### Reference numeral list

- 100: overview of a peak-memory-aware pruning system according to various embodiments;
- 102: ML model file
- 104: test data
- 106: user configuration
- 108: generation of intermediate representation
- 110: generic machine learning graph intermediate representation
- 112: evaluation of importance metrics
- 114: pruning metrics
- 116: peak-memory aware pruning
- 118: textual and graphical report
- 120: pruning configuration
- 122: training
- 124: memory-aware pruned ML model
- 126: memory-aware pruning analysis

- 200: example of an intermediate representation according to various embodiments
- 202: intermediate representation
- 204: layer
- 206: tensor
- 208: layer
- 210: tensor

- 300: flow diagram illustrating details of the peak-memory-aware pruning method according to various embodiments
- 302: method step of extracting tensor working sets
- 304: method step of identifying tensor working set with the peak memory
- 306: method step of identifying layers responsible of the peak memory
- 308: method step of pruning least important channel of the responsible layers
- 310: method step of determining whether the peak memory of the working set if below the budget
- 312: method step of computing global ML model peak memory
- 314: method step of determining whether the new global peak memory is below the budget
- 316: method step of generating pruning report and configuration

- 400: illustration of an example of the liveness analysis according to various embodiments
- 402: first layer
- 404: first tensor
- 406: second layer
- 408: second tensor
- 410: third layer
- 412: third tensor
- 414: fourth layer

- 500: MLGraph as generated according to various embodiments
- 502: concatenation layer
- 504: tensors which require the peak memory usage

- 600: layer summary report according to various embodiments

- 700: tensor summary report according to various embodiments

- 800: working set summary report according to various embodiments
- 900: example of a graph of the memory of the different working sets according to various embodiments
- 902: input tensors to the given layer before pruning
- 904: output tensors to the given layer before pruning
- 906: tensors that are simultaneously alive before pruning
- 912: input tensors to the given layer after pruning
- 914: output tensors to the given layer after pruning
- 916: tensors that are simultaneously alive after pruning

- 1000: flow diagram illustrating a method for optimizing a memory usage of an artificial neural network graph including a plurality of layers and a plurality of tensors according to various embodiments; and
- 1002: step of, for each of the plurality of layers, determining a tensor working set
- 1004: step of determining whether at least one working set of the plurality of working sets requires memory usage above a pre-determined threshold
- 1006: step of, if it is determined that at least one working set of the plurality of working sets requires memory usage above the pre-determined threshold, identifying a working set of the plurality of working sets which requires memory usage above the pre-determined threshold
- 1008: step of identifying at least one layer responsible for the memory usage above the pre-determined threshold in the identified working set
- 1010: step of pruning the identified at least one layer.

- 1100: computer system according to various embodiments
- 1102: processor
- 1104: memory
- 1106: non-transitory data storage
- 1108: connection

## Claims

1. Computer implemented method for optimizing a memory usage of an artificial neural network graph comprising a plurality of layers and a plurality of tensors,
the method comprising the following steps:
- for each of the plurality of layers, determining (1002) a tensor working set, wherein the tensor working set comprises tensors that consume memory with respect to the respective layer;
- determining (1004) whether at least one working set of the plurality of working sets requires memory usage above a pre-determined threshold;
- if it is determined that at least one working set of the plurality of working sets requires memory usage above the pre-determined threshold, identifying (1006) a working set of the plurality of working sets which requires memory usage above the pre-determined threshold;
- identifying (1008) at least one layer responsible for the memory usage above the pre-determined threshold in the identified working set; and
- pruning (1010) the identified at least one layer.

2. The computer implemented method of claim 1,
wherein the steps of identifying and pruning are repeated until every working set of the plurality of working sets requires memory below the pre-determined threshold.

3. The computer implemented method of claim 2,
wherein in each step of identifying, the working set which requires a highest amount of memory, is identified.

4. The computer implemented method of at least one of claims 1 to 3, wherein each layer comprises a respective plurality of channels; and wherein pruning the at least one identified layer comprises reducing a number of channels of the at least one identified layer.

5. The computer implemented method of at least one of claims 1 to 4,
wherein pruning the at least one identified layer comprises removing the at least one identified layer.

6. The computer implemented method of at least one of claims 1 to 5,
wherein the working set of the plurality of working sets which requires maximum memory usage is determined based on an architecture of the artificial neural network graph.

7. The computer implemented method of at least one of claims 1 to 6, further comprising the following step:
determining an intermediate representation of the artificial neural network graph;
wherein the working set of the plurality of working sets which requires maximum memory usage is determined based on the intermediate representation.

8. The computer implemented method of at least one of claims 1 to 7,
wherein once every working set of the plurality of working sets requires memory below the pre-determined threshold, the artificial neural network graph after pruning is re-trained from scratch or fine-tuned from a previous training.

9. The computer implemented method of at least one of claims 1 to 8,
wherein the at least one identified layer is pruned based on an importance metric, wherein preferably the importance metric is provided by user input.

10. The computer implemented method of claim 9,
wherein the importance metric is evaluated based on representative test data;
the computer implemented method preferably further comprising the following step:
training the artificial neural network graph before evaluating the importance metrics.

11. The computer implemented method of at least one of claims 1 to 10, further comprising the following step:
generating a report comprising at least one of a layer summary report, a tensor summary report, or a working set summary report.

12. The computer implemented method of at least one of claims 1 to 11,
wherein the artificial neural network and or the pre-determined threshold are provided by user input.

13. The computer implemented method of at least one of claims 1 to 12,
wherein the artificial neural network graph is to be deployed on a resource-constrained embedded system after pruning;
wherein preferably the embedded system is a mobile computing device, a mobile phone, a tablet computing device, an automotive compute platform, or an edge device.

14. Computer system (1100), the computer system (1100) comprising a plurality of computer hardware components configured to carry out steps of the computer implemented method of at least one of claims 1 to 13.

15. Non-transitory computer readable medium comprising instructions for carrying out the computer implemented method of at least one of claims 1 to 13.
